# EUROPÄISCHE PATENTSCHRIFT

(11) **EP 2 112 395 B1**
(45) Veröffentlichungstag und Bekanntmachung des Hinweises auf die Patenterteilung: **01.12.2010**
(21) Anmeldenummer: 09005673.0
(22) Anmeldetag: 22.04.2009
(51) Int. Cl.: F16D 65/04, F16D 69/04

(54) **Brems- und/oder Klemmvorrichtung für Wellen**
Braking and/or clamping device for shafts
Dispositif de freinage et/ou de serrage pour arbres

(30) Priorität: 23.04.2008 DE 102008020518
(43) Veröffentlichungstag der Anmeldung: 28.10.2009
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang

(56) Entgegenhaltungen:
- DE-A1-102005 016 723
- US-B1- 6 206 145
- US-B1- 6 494 298

## Beschreibung

Die Erfindung betrifft eine Brems- und/oder Klemmvorrichtung zum Bremsen oder Klemmen einer Welle gegenüber einem Gehäuse, wobei die Vorrichtung mindestens drei über ein Schiebekeilgetriebe betätigbare Reibgehemme umfasst, wobei das einzelne Schiebekeilgetriebe zur Belastung des Reibgehemmes mittels Federkraft und/oder Druckluftkraft in eine Richtung und zur Entlastung mittels Druckkraft in die entgegengesetzte Richtung bewegt wird.

Aus der DE 10 2005 016 723 A1 ist eine derartige Brems- und/oder Klemmvorrichtung bekannt. Bei dieser Vorrichtung wirken die einzelnen Schiebekeilgetriebe über eine elastische Klemmhülse auf die festzuklemmende Welle. Die die Welle umgebende Klemmhülse eignet sich besonders für Wellen kleiner Durchmesser. Auch werden alle Schiebekeilgetriebe über eine gemeinsame Zylinder-Kolben-Einheit entlastet.

Der vorliegenden Erfindung liegt die Problemstellung zugrunde, eine Brems- und/oder Klemmvorrichtung zu entwickeln, die bei großer Klemmkraft einen geringen Bauraumbedarf hat. Zudem soll sie bei wartungsarmer, einfacher und sicherer Handhabung die Brems- und Klemmkräfte reaktionsschnell und nahezu verschleißfrei freisetzen, ohne die am Bremsen und/oder Klemmen beteiligte Welle abrasiv zu schädigen.

Diese Problemstellung wird mit den Merkmalen der Ansprüche 1 und 11 gelöst. Nach Anspruch 1 weist dazu jedes Reibgehemme wenigstens ein in einem Gehäuse gelagertes, an die Welle anpressbares Reibelement auf. Das einzelne Reibelement liegt mit einer Reibzone über Flächen- oder Linienberührung bereichsweise an der Welle an. Das einzelne Reibelement stützt sich außerhalb der Reibzone am Gehäuse ab.

Nach Anspruch 11 hat jedes Reibgehemme ein separates, am - gegenüber der Welle - ortsfesten Maschinenteil befestigbares Gehäuse. Die Reibgehemme sind äquidistant verteilt um die Welle herum angeordnet. Jedes Reibgehemme weist wenigstens ein in dem Gehäuse gelagertes, an die Welle anpressbares Reibelement auf. Das einzelne Reibelement liegt mit einer Reibzone über Flächen- oder Linienberührung bereichsweise an der Welle an. Das einzelne Reibelement stützt sich außerhalb der Reibzone am tragenden Maschinenteil ab.

Die einzelne Brems- und/oder Klemmvorrichtung umfasst mehrere, im Kreis um eine zu bremsende und/oder zu klemmende Welle angeordnete Reibgehemme. Jedes Reibgehemme wird mittels Federkraft und/oder Druckluftkraft betätigt und zumindest mittels Druckluftkraft entlastet. Die Feder- und die Druckluftkräfte werden jeweils mit Hilfe eines z.B. ebenen Schiebekeilgetriebes zu Klemmkräften verstärkt. Jedes Reibgehemme hat ein sich am Gehäuse und/oder Grundkörper spielfrei abstützendes Reibelement, das während des Bremsens und/oder Klemmens in einen direkten Kontakt mit der Welle kommt.
Im Ausführungsbeispiel sind alle Reibgehemme so angeordnet, dass die Flächenschwerpunkte der Reibzone zumindest annähernd in einer zur Mittellinie der Welle normalen Ebene liegen. Ggf. kann sich auch ein Teil der Reibgehemme außerhalb dieser Ebene befinden.

Um besonders hohe Brems- oder Klemmkräfte zu erzeugen, können die Reibgehemme auch zwei- oder mehrreihig hintereinander in einem Gehäuse untergebracht werden. Auch kann der pneumatische Antrieb der Zylinder-Kolben-Einheiten durch einen hydraulischen Antrieb ersetzt werden.

Weitere Einzelheiten der Erfindung ergeben sich aus den Unteransprüchen. Es folgen Beschreibungen schematisch dargestellter Ausführungsbeispiele.
- Figur 1:: Perspektivische Ansicht einer Brems- und/oder Klemmvorrichtung mit mehreren Reibgehemmen;
- Figur 2:: Teilquerschnitt C-C zu Figur 1 und 4;
- Figur 3:: Längsschnitt D-D durch die Reibgehemme, rechte Figurenseite: unbelastetes Reibgehemme, linke Fi- gurenseite: belastetes Reibgehemme;
- Figur 4:: Längsschnitt A-A durch die Druckluftanschlüsse;
- Figur 5:: Reibelement;
- Figur 6:: Pneumatikkolben nach Figur 3;
- Figur 7:: Pneumatikkolben nach Figur 3, jedoch andere Ansicht;
- Figur 8:: Reibgehemme mit gestecktem Reibelement;
- Figur 9:: Reibgehemme mit angeformtem Reibelement;
- Figur 10:: Reibgehemme mit hinterdrehtem Reibelement;
- Figur 11:: Seitenansicht zu Figur 10.

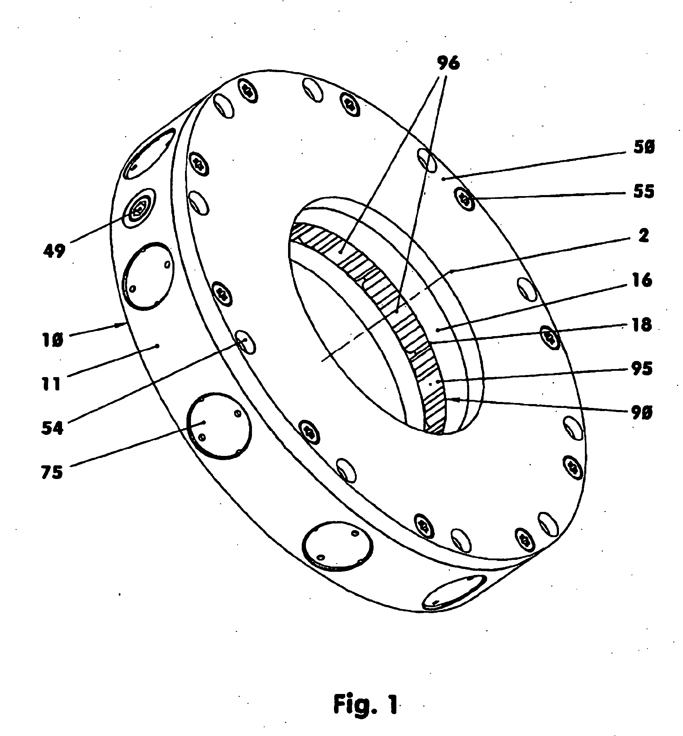

Die Figuren 1 bis 4 zeigen eine Brems- und/oder Klemmvorrichtung, wie sie beispielsweise zum Klemmen von in Werkzeug- und/oder Messmaschinen eingesetzten Wellen verwendet werden. Die Vorrichtung der vorliegenden Ausführungsform ist hierbei am entsprechenden Maschinenteil (5) so angeordnet, dass sie die festzuklemmende Welle (1) in der Regel mit mehr als drei Reibgehemmen (60) umgreift. An der Welle (1) liegen beim Klemmen von den Reibgehemmen (60) bewegte Reibelemente (90-93). Jedes einzelne Reibelement (90-93) hat eine Reibzone (95). Die Flächenschwerpunkte (96) der Reibzonen (95) liegen z.B. in einer Ebene, die normal zur Mittellinie (2) der Welle (1) orientiert ist.

Das Gehäuse (10) besteht im Wesentlichen aus einem Grundkörper (11) und einem Deckel (50). Es hat im Ausführungsbeispiel einen Durchmesser von 185 mm und eine Bauhöhe von 35 mm. Nach den Figuren 1 bis 4 ist der Grundkörper (11) ein ringförmiges Bauteil mit einer zentralen Bohrung (15), die die Welle (1), deren Durchmesser hier 90 mm beträgt, umgibt. In den Grundkörper (11) sind 10 radial zu dessen Mittellinie (2) ausgerichtete Stufenbohrungen (25) von außen her eingearbeitet. Die Stufenbohrungen (25) enden in einer Ringnut (18) der Bohrung (15). Die Ringnut (18) hat normal zur Mittellinie (2) ausgerichtete Seitenwandungen. Ihre Grundfläche ist zylindrisch. Jede einzelne zur Mittellinie (2) parallele Sacklochbohrung (27) wird durch eine radiale Stufenbohrung (25) geschnitten.

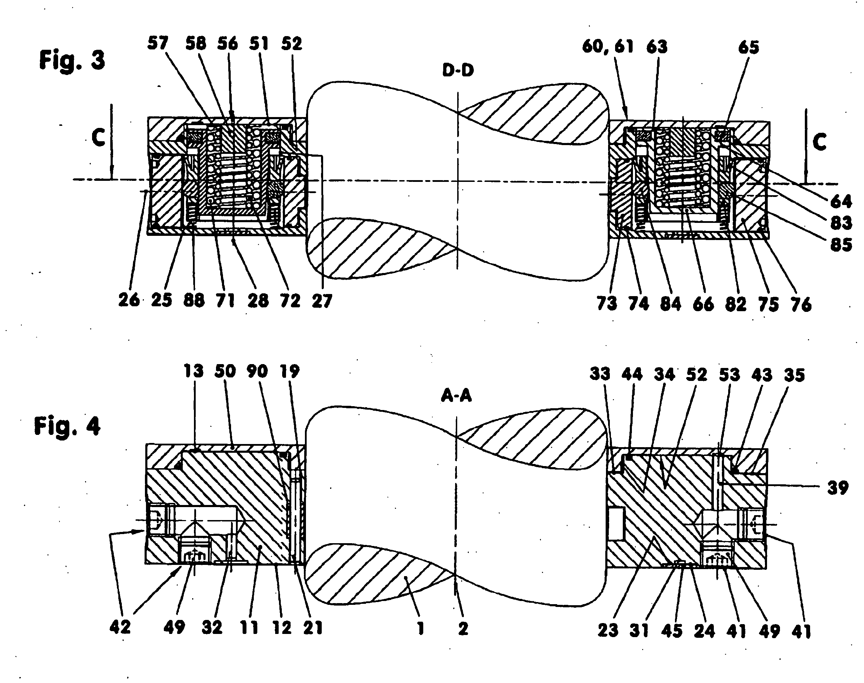

Der Grundkörper (11) hat eine Unterseite (12), in die ein flacher, breiter Ringkanal (23) eingedreht ist. Im Grund (24) des Ringkanals (23), der parallel zur Unterseite (12) orientiert ist, ist ein schmaler Luftführkanal (31) eingearbeitet. Letzterer schneidet die Sacklochbohrungen (27). In den Ringkanal (23) ist eine Ringscheibe (45) zum gasdichten Abdecken des Luftführkanals (31) eingeklebt, vgl. Figuren 3 und 4.

Die Oberseite (13) des Grundkörpers (11) weist, sowohl nach innen als auch nach außen versetzt, beidseits der Sacklochbohrungen (27) je einen Gehäusebund (33, 35) auf. Der innere Gehäusebund (33) trägt ein Gewinde (34), z.B. ein Feingewinde M 100x1. Zwischen dem Gehäusebund (33) und den Sacklochbohrungen (27) befindet sich ein Ringkanal zur Aufnahme eines Dichtungsrings (44). Beide Gehäusebünde (33, 35) haben z.B. die gleiche Höhe.

In den Wandungen der Ringnut (18), die normal zur Mittellinie (2) orientiert sind, befinden sich pro Reibgehemme (60) zwei Durchgangsbohrungen (19), die die Stirnfläche des inneren Gehäusebundes (33) und die Unterseite (12) des Grundkörpers (11) miteinander verbinden. Beide Durchgangsbohrungen (19) sitzen seitlich neben der entsprechenden Stufenbohrung (25).

Im Bereich des äußeren Gehäusebundes (35) sind 10 Gewindebohrungen (36) für die Verschraubung des Deckels (50) angeordnet. Die Gewindebohrungen (36) sitzen versetzt zu den Stufenbohrungen (25). Neben jeder Gewindebohrung (36) sitzt z.B. auf dem gleichen Lochkreis eine Durchgangsbohrung (37), die in der Unterseite (12) des Grundkörpers (11) in einer Stufensenkung endet.

Auf der Oberseite (13) des Grundkörpers (11) sitzt der Deckel (50), der zumindest auf dem äußeren Gehäusebund (35) aufliegt. Dazu hat der Deckel (50) eine ringförmige Eindrehung (51), deren Bodenfläche (52) gegenüber den Öffnungen der Sacklochbohrungen (27) liegt. In der Bodenfläche (52) der Eindrehung (51) befindet sich ein schmaler Luftführkanal (53), der die Sacklochbohrungen (27) miteinander pneumatisch verbindet. Die innere zylindrische Wandung der Eindrehung (51) ist mit einem Feingewinde ausgestattet. Im Bereich des äußeren Gehäusebundes (35) hat der Deckel eine 45°-Fase, um dort einen Dichtring (43) in der Hohlkehle des Gehäusebundes (35) gasdicht einzuklemmen.

Um den oberen Luftführkanal (53) mit Druckluft zu versorgen oder entlüften zu können, ist dieser über eine Bohrung (39), vgl. Figur 4, mit einem zweifachen Luftanschluss (41) verbunden. Auch der untere Luftführkanal (31) steht über eine Bohrung (32) mit einem zweifachen Luftanschluss (42) in Verbindung. Beide Luftanschlüsse (41, 42) enden sowohl in der Unterseite (12) als auch in der radialen Außenwandung (14) des Grundkörpers (11). Jeweils mindestens einer ist durch einen Stopfen (49) verschlossen.

Am Rand des Deckels (50) befinden sich im Bereich des äußeren Gehäusebundes (35) 20 Durchgangsbohrungen (54) mit Stufensenkungen. Jeweils 10 fluchten mit den Gewindebohrungen (36), die anderen 10 mit den Durchgangsbohrungen (37) des Grundkörpers (11).

Zur Montage des Deckels (50) wird dieser zunächst über das Feingewinde (34) auf den Grundkörper (11) geschraubt, bis der Deckel (50) auf dem inneren Gehäusebund (33) aufliegt. Dann wird der Deckel (50) so weit zurückgedreht, bis das Lochbild des Deckels (50) auf das Lochbild der Gewindebohrungen (36) passt. Der Schwenkwinkel der Zurückdrehung ist kleiner als 36 Winkelgrade. Abschließend wird der Deckel (50) mittels der Schrauben (55) mit dem Grundkörper (11) verschraubt.

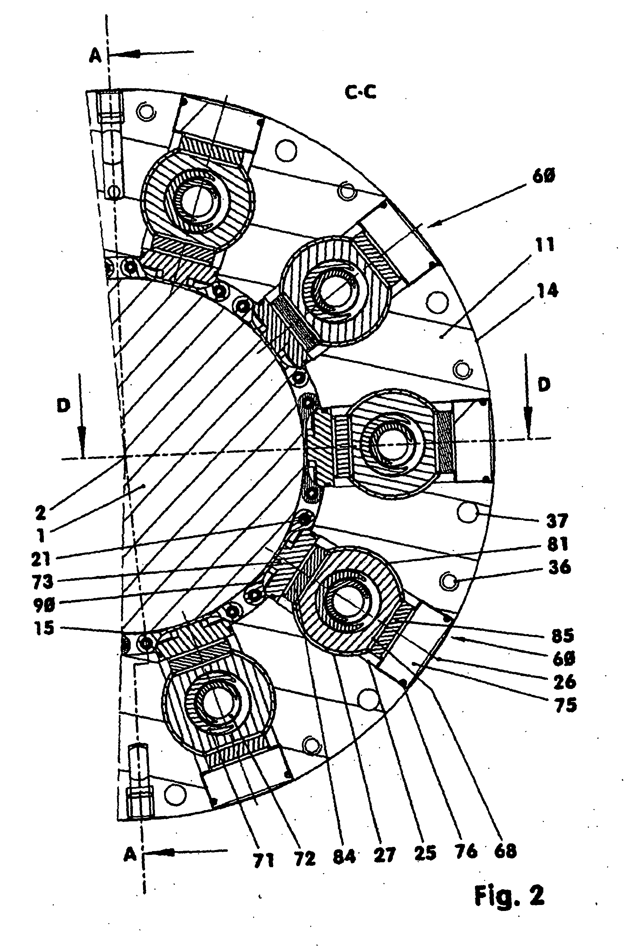

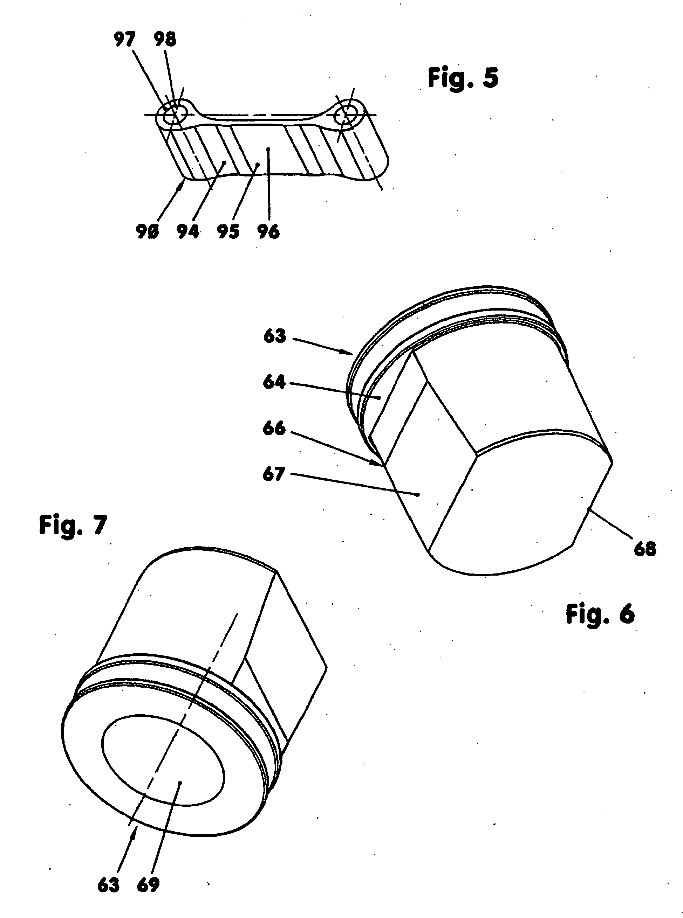

In der Ringnut (18) des Grundkörpers (11) ist pro Reibgehemme (60) ein Reibelement (90), vgl. Figur 5 und 2, angeordnet. Das einzelne Reibelement (90) ist ein flaches, elastisches Biegeelement (94), an dem beidseits je ein Befestigungsauge (97) angeordnet ist. Jedes Befestigungsauge (97) weist eine Bohrung (98) auf. Das Biegeelement (94) ist gegenüber einer Ebene, die durch die beiden Mittellinien der Bohrungen (98) gebildet wird, zur Welle (1) hin z.B. um 2,3 mm versetzt. Das Biegeelement (94) hat hier ein mittlere Wandstärke von 1,4 mm. Der Bereich, der beim Klemmen an der Welle (1) anliegt, ist die Reibzone (95). Sie ist im Ausführungsbeispiel nach Figur 1, 2 und 5 ein Teil einer Zylindermantelfläche. Ggf. ist das Biegeelement (94) im Bereich der Reibzone (95) formsteif ausgebildet, während es zwischen der Reibzone (95) und den Befestigungsaugen (97) besonders biegeweich gestaltet ist. Die Reibzone (95) ist beispielsweise mit einem Reibbelag aus einem pulvermetallurgisch hergestellten Reibwerkstoff auf Bronzebasis beschichtet. Der Reibwerkstoff enthält ggf. zusätzlich keramische'Bestandteile. Alternativ kann der Reibbelag am Reibelement (90-93) auch verklebt oder verlötet sein.

Die Breite des einzelne Reibelements (90) - gemessen parallel zur Mittellinie (2) - ist so gewählt, dass es mit geringem Spiel zwischen die seitlichen Flanken der Ringnut (18) passt. Es wird nach Figur 2 in der Ringnut (18) mittels Federstiften (21) gehalten. Die Federstifte (21) durchqueren jeweils die Bohrungen (19) und (98). Anstelle der Federstifte (21) können auch Kerbstifte oder Zylinderstifte verwendet werden. Nach der Montage berühren die unbelasteten Reibelemente (90) nicht die Welle (1). Zwischen der Welle (1) und der Reibzone (95) liegt ein Lüftabstand von 0,02 bist 0, 3 mm.

Das zweifach abgestützte Reibelement (90) sitzt zumindest in Umfangsrichtung spielfrei im Grundkörper (11). Die Welle (1) wird beim Klemmen gegenüber dem Gehäuse (10) unabhängig vom Drehsinn des zu haltenden Drehmoments blockiert.

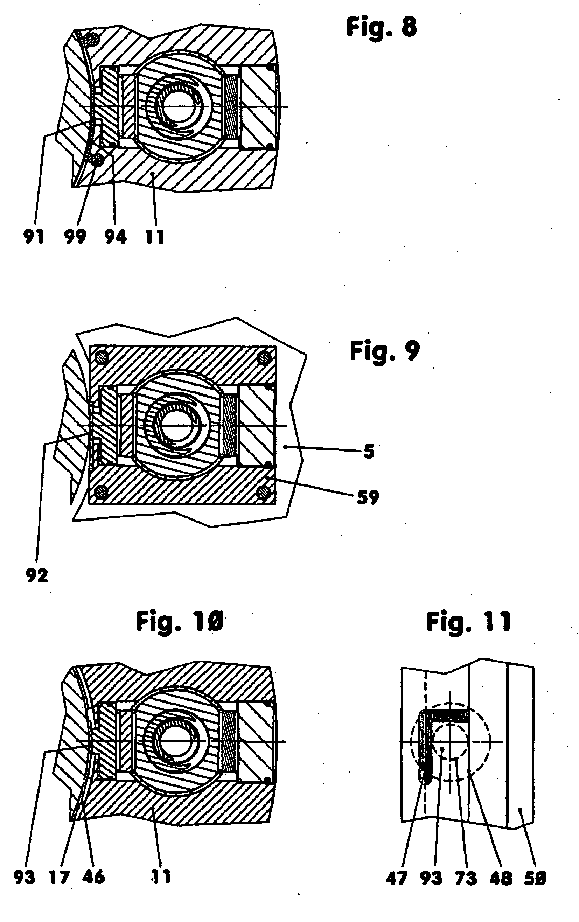

In Figur 8 wird ein ein- bzw. halbseitig im Grundkörper (11) gelagertes Reibelement (91) gezeigt, dessen Biegeelement (94) im Befestigungsbereich um z.B. 90 Winkelgrade abgewinkelt ist und in einem angeformten Bolzen (99) endet. Der Bolzen (99) ist in eine gehäuseseitige Bohrung eingepresst. Ggf. hat die Hälfte der pro Gehäuse (10) verwendeten Reibelemente (91) die in Figur 8 dargestellte Form, während die andere Hälfe eine Form hat, die zu dieser spiegelsymmetrisch aufgebaut ist. Die Symmetrieebene ist hierbei eine Ebene, die durch die sich schneidenden Mittellinien (2) und (26) gebildet wird.

Figur 9 zeigt ein Reibgehemme, bei der das Reibelement (92) ein Teil des Grundkörpers (11, 59) ist. Der Spalt zwischen dem Grundkörper (11, 59) und dem Reibelement (92) wird beispielsweise durch Drahterodieren herausgearbeitet. Das Reibelement (92) hat hier z.B. die Form einer ebenen Platte.

Diese Figur zeigt zudem ein Reibgehemme, das in einem quaderförmigen Grundkörper (59) untergebracht ist. Aus mindestens drei z.B. sternförmig um eine Welle (1) formsteif platzierten Reibgehemmen entsteht - nach einer pneumatischen Verbindung über Druckluftleitungen - eine Brems und/oder Klemmvorrichtung.

Die Figuren 10 und 11 zeigen eine weitere Alternative, bei der der Grundkörper (11) und die Reibelemente (93) aus einem Teil gefertigt sind. Hierzu wird hier - von der Oberseite (13) aus - am Grundkörper (11) ein Absatz (48) abgedreht, um dann einen Ringkanal (46) ab dem Absatz (48) einzustechen, der gegenüber der Bohrungswandung (16) einen schmalen Steg (17) stehen lässt. Die Stegbreite entspricht hierbei der Wandstärke des Reibelements (93). Abschließend wird von der Bohrung (15) aus die in Figur 11 grau dargestellte Fläche herausgefräst, so dass ein freischwingendes Reibelement (93) entsteht, das die Form eines Ausschnitts eines Zylindermantels hat. Der untere Teil des herausgefrästen Teils schneidet den Grund (47) des Ringkanals (46).

In jedem Hohlraum zweier sich schneidender Stufen- (25) und Sacklochbohrungen (27) ist ein Reibgehemme (60) untergebracht.

Im hinteren - also wellennahen - Bereich der radialen Stufenbohrung (25) sitzt das z.B. rotationssymmetrische Druckstück (73). Es liegt am Reibelement (90) an der Rückseite der Reibzone (95) direkt an. Das Druckstück (73) ist ein zylindrischer Kolben mit einer angeformten Kolbenstange. Die Kolbenstange ragt vollständig in die Ringnut (18) hinein, während dies der Kolben nur bereichsweise tut. Am Kolben befindet sich eine Nut, in der ein elastischer Dichtring (74) sitzt. Zwischen dem Grund der Stufenbohrung (25) und dem Kolben ist ggf. ein - hier nicht dargestellter - Rückhubring angeordnet.

Im vorderen Bereich der Stufenbohrung (25), einem Gewindeabschnitt, sitzt verstellbar eine Einstellschraube (75). Die Einstellschraube (75) ist eine zylindrische Scheibe, die an der äußeren Stirnfläche Bohrungen für den Eingriff eines Zapfenschlüssels aufweist. Sie hat ein Außengewinde, das in einer Ringnut endet. In der Ringnut ist ein Quetschring (76) als Schraubensicherung und eine Druckluftdichtung eingelassen.

In der Sacklochbohrung (27) sitzt der Käfig (81), der zwei Zylinderrollen (84, 85) lagert. Beide Zylinderrollen (84, 85) liegen an dem Schiebekeil (66) eines Schiebekeilgetriebes (61) an. Die außen liegende Zylinderrolle (85) stützt sich an der Einstellschraube (75) ab, während die innen liegende Zylinderrolle (84) an dem Druckstück (73) anliegt. Letzteres hat nur beispielhaft einen Durchmesser von 21 mm. Er kann auch viele Millimeter kleiner gewählt werden.

Zwischen dem Druckstück (73) und der Einstellschraube (75) ist ein Kolben (63), umgeben von einem Käfig (81), angeordnet. Der Kolben (63), er hat hier eine Durchmesser von 28 mm, ist nach Figur 3 im oberen Bereich der Sacklochbohrung (27) geführt. Dieser Sacklochbereich bildet zusammen mit dem die Sacklochbohrung (27) verschließenden Deckel (50) den Zylinder einer antreibenden Zylinder-Kolben-Einheit. Eine Kolbendichtung (65) trennt die Kolbenbodenseite von der Kolbenstangenseite (64). Der abgeschlossene, durch die Bohrungen (25) und (27) gebildete, unterhalb der Kolbenstangenseite (64) gelegene Hohlraum bildet den Zylinder einer rückstellenden, pneumatischen Zylinder-Kolben-Einheit.

Im Kolben (63) befindet sich eine zentrale Ausnehmung (69), z.B. in Form einer Sacklochbohrung, in der im Ausführungsbeispiel zwei Federelemente (71, 72), z.B. zwei Schraubendruckfedern, angeordnet sind. Anstelle der Schraubendruckfedern können Tellerfedern, Tellerfederpakete, Blattfedern, Gummifedern, Gasfedern und dergleichen verwendet werden.

Die Schraubendruckfedern (71, 72), die ggf. unterschiedliche Wickelrichtungen haben, liegen nach Figur 3 über ein Federführelement (56) am Deckel (50) an. Das z.B. einteilige Federführelement (56) besteht aus einem Stützteller (57) und einem angeformten Zapfen (58). Der Zapfen (58) steckt mit geringem Spiel im inneren Federelement (72). Am Stützteller (57) liegen die oberen Enden der Federelemente (71, 72) an. Durch das Einsetzen des Federführelements (56) kann bei der Montage der Deckel (50) auf den Grundkörper (11) geschraubt werden, ohne dass die letzten Windungen der Federelemente (71, 72) unbeabsichtigt in die zwischen dem Deckel (50) und dem Grundkörper (11) gelegenen Montagefuge gelangen können.

Der Kolben (63) hat anstelle einer Kolbenstange einen z.B. angeformten Schiebekeil (66) in Form eines bereichsweise hohlen Zylinders, der an zwei einander gegenüberliegenden Seiten abgeflacht ist, vgl. Figuren 6 und 7. Der Schiebekeil (66) hat u.a. eine Stütz- (68) und eine Keilfläche (67). Beide Flächen sind viereckig und z.B. plan. Die jeweils dem Druckstück (73) zugewandte Keilfläche (67) schließt mit diesem z.B. einen spitzen Winkel von 1 bis 5 Winkelgraden ein. Die Stützfläche (68) verläuft parallel zur Stirnfläche der benachbarten Einstellschraube (75). Beispielsweise verjüngen sich die Querschnitte des Schiebekeils (66) linear mit zunehmendem Abstand weg von des Kolbenstangenseite (64) des Kolbens (63).

Der den Schiebekeil (66) umgebende Käfig (81), er wird quer zur Stufenbohrung (25) in die Sacklochbohrung (27) eingesetzt, hat primär die Form eines Rohres mit zwei querliegenden Schlitzen (82) und mehreren abgespreizten Anschlaglippen (83). Die querliegenden Schlitze (82) dienen jeweils der Aufnahme einer Zylinderrolle (84, 85). Die Anschlaglippen (83) sind elastisch nach außen federnde Zungen, die sich ausstellen, sobald der Käfig (81) so tief in die Sacklochbohrung (27) eingeschoben ist, dass die Anschlaglippen (83) im Bereich der Stufenbohrung (27) auffedernd freikommen.

In der unteren Stirnfläche des Käfigs (81) sind z.B. zwei Sacklochbohrungen angeordnet, in denen jeweils z.B. eine Schraubendruckfeder (88) zur Rückholung des Käfigs (81) eingesetzt sind. Nach Figur 3 drücken die Rückholfedern (88) den Käfig (81) nach oben. Liegt der Kolben (63) am Deckel (50) an, so stützt sich der Käfig (81) über die Anschlaglippen (83) an der Wandung der radialen Stufenbohrung (27) ab, vgl. Figur 3, rechte Figurenseite.

Während des Normalbetriebes des die Vorrichtung tragenden Maschinenteils (5) wird der untere im Grundkörper (11) liegende Luftführkanal (31) mit Druckluft versorgt, vgl. Figur 3 und 4. Der Kolben (63) wird gegen die Wirkung der Federelemente (71, 72) oben an den Deckel (50) gepresst und der Käfig (81) befindet sich in seiner oberen Position, vgl. Figur 3, rechte Seite. Die Zylinderrollen (84, 85) sitzen unbelastet im Käfig (81) Die Reibelemente (90-93) kontaktieren nicht die Welle (1). Letztere kann ungehindert rotieren oder sich in Längsrichtung relativ zum Gehäuse (10) bewegen.

Fällt nun im unteren Luftführkanal (31) die Druckluft ab, unabhängig davon, ob eine Systemstörung vorliegt, ein Bremsvorgang eingeleitet werden soll oder ob nur die Welle (1) festgeklemmt werden soll, schieben die jeweiligen Schraubendruckfedern (71, 72) den Schiebekeil (66) nach unten, vgl. Figur 3 linke Seite.

Im Bereich der Sacklochbohrung (27) legen sich mit zunehmendem Schiebekeilhub die Flächen (67, 68) an den im Käfig (81) geführten Zylinderrollen (84, 85) spielfrei an. Die außen liegende Zylinderrolle (85) stützt den Schiebekeil (66) an der Einstellschraube (75) ab, während die innen liegende Zylinderrolle (84) das Druckstück (73) gegen den Widerstand des Reibelements (90) auf die Welle (1) zuschiebt. Die Zylinderrollen (84, 85) wälzen nun zwischen den Bauteilen (73, 66, 75) so lange ab, bis sich im Ausführungsbeispiel ein Kräftegleichgewicht zwischen der Federkraft des Gehäuses (10) und der Federkraft der Federelemente (71, 72) eingestellt hat. Dann haben die Reibgehemme (60) - bei reiner Federkraftwirkung - ihre maximale Klemmkraft erreicht. Die Reibelemente (90-93) liegen über die Reibzonen (95) an der Welle (1) an. Das Bremsmoment beträgt bei der vorliegenden Ausführungsvariante 200 ± 50 Nm.

Über den oberen Luftführkanal (53) kann zusätzlich die Kolbenbodenseite des Kolbens mit Druckluft beaufschlagt werden. In diesem Fall erhöht sich das Bremsmoment auf 400 ± 100 Nm bei einem Luftdruck von 4 x 10⁵ Pa.

### Bezugszeichenliste:

- 1: Welle
- 2: Mittellinie, Führungslängsrichtung
- 5: Maschinenteil

- 10: Gehäuse
- 11: Grundkörper
- 12: Unterseite
- 13: Oberseite
- 14: Außenwandung
- 15: Bohrung, zentral, für (1)
- 16: Bohrungswandung
- 17: Steg
- 18: Ringnut in (15)
- 19: Durchgangsbohrungen für (21)

- 21: Federstifte, Kerbstifte, Zylinderstifte

- 23: Ringkanal in (12)
- 24: Grund des (23)
- 25: Stufenbohrung, horizontal, radial
- 26: Mittellinie
- 27: Sacklochbohrung, vertikal
- 28: Mittellinie

- 31: Luftführkanal, unten
- 32: Bohrung
- 33: Gehäusebund, innen
- 34: Feingewinde

- 35: Gehäusebund, außen
- 36: Gewindebohrungen
- 37: Durchgangsbohrungen
- 39: Bohrung
- 41: Luftanschluss, oben
- 42: Luftanschluss, unten

- 43: Dichtring, außen
- 44: Dichtring, innen
- 45: Ringscheibe
- 46: Ringkanal für (93)
- 47: Ringkanalgrund von (46)
- 48: Absatz an (11)
- 49: Stopfen

- 50: Deckel
- 51: Eindrehung
- 52: Bodenfläche
- 53: Luftführkanal, oben .
- 54: Durchgangsbohrungen
- 55: Schrauben für (50)
- 56: Federführelement
- 57: Stützteller
- 58: Zapfen
- 59: Gehäuse, quaderförmig

- 60: Reibgehemme
- 61: Schiebekeilgetriebe
- 63: Kolben
- 64: Kolbenstangenseite
- 65: Kolbendichtung
- 66: Schiebekeil
- 67: Keilfläche
- 68: Stützfläche
- 69: Ausnehmung, Sacklochbohrung

- 71: Federelement, Schraubendruckfeder, außen
- 72: Federelement, Schraubendruckfeder, innen

- 73: Druckstück
- 74: Dichtring
- 75: Einstellschraube
- 76: Quetschring

- 81: Käfig
- 82: Schlitze
- 83: Anschlaglippen
- 84: Zylinderrolle, innen
- 85: Zylinderrolle, außen
- 88: Rückholfedern, Schraubendruckfedern

- 90: Reibelement, knochenförmig
- 91: Reibelement, halbseitig geklemmt
- 92: Reibelement, halbseitig, herauserodiert
- 93: Reibelement, halbseitig, herausgedreht

- 94: Biegeelement
- 95: Reibzone
- 96: Flächenschwerpunkte

- 97: Befestigungsaugen
- 98: Bohrungen
- 99: Bolzen

## Patentansprüche

1. Brems- und/oder Klemmvorrichtung zum Bremsen oder Klemmen einer Welle gegenüber einem Gehäuse (10),
- wobei die Vorrichtung mindestens drei über ein Schiebekeilgetriebe (61) betätigbare Reibgehemme (60) umfasst,
- wobei das einzelne Schiebekeilgetriebe (61) zur Belastung des Reibgehemmes (60) mittels Federkraft und/oder Druckluftkraft in eine Richtung und zur Entlastung mittels Druckkraft in die entgegengesetzte Richtung bewegt wird,
**dadurch gekennzeichnet,**
- **dass** jedes Reibgehemme (60) wenigstens ein in einem Gehäuse (10) gelagertes, an die Welle (1) anpressbares Reibelement (90-93) aufweist,
- **dass** das einzelne Reibelement (90-93) mit einer Reibzone (95) über Flächen- oder Linienberührung bereichsweise an der Welle (1) anliegt und
- **dass** sich das einzelne Reibelement (90-93) außerhalb der Reibzone (95) am Gehäuse (10) abstützt.

2. Vorrichtung gemäß Anspruch 1, **dadurch gekennzeichnet, dass** das Reibelement (90-93) - in Umfangsrichtung der Welle gesehen - vor und/oder hinter der Reibzone (95) am Gehäuse (10) befestigt oder gelagert ist.

3. Vorrichtung gemäß Anspruch 1, **dadurch gekennzeichnet, dass** das Reibelement (90-93) vor und hinter der Reibzone (95) jeweils ein Befestigungsauge (97) hat, das über Bolzen, Kerb- oder Federstifte (21) am Gehäuse (10) angelenkt ist.

4. Vorrichtung gemäß Anspruch 3, **dadurch gekennzeichnet, dass** das Reibelement (90-93) zwischen den Befestigungsaugen (97) zumindest bereichsweise dünnwandig und elastisch ausgeführt ist.

5. Vorrichtung gemäß Anspruch 1, **dadurch gekennzeichnet, dass** das Reibelement (90-93) spielfrei im Gehäuse (10) gelagert, befestigt oder angeformt ist.

6. Vorrichtung gemäß Anspruch 1, **dadurch gekennzeichnet, dass** hinter der Reibzone (95) eines einzelnen Reibelements (90-93) ein radial gegenüber der Welle (1) ausgerichtetes Druckstück (73) angeordnet ist.

7. Vorrichtung gemäß Anspruch 1, **dadurch gekennzeichnet, dass** der Schiebekeil (66) des Schiebekeilgetriebes (61) Teil eines Kolbens (63) ist.

8. Vorrichtung gemäß Anspruch 7, **dadurch gekennzeichnet, dass** der Kolben (63) eine Mittellinie (28) hat, die parallel zur Mittellinie (2) der Welle (1) ausgerichtet ist.

9. Vorrichtung gemäß Anspruch 7, **dadurch gekennzeichnet, dass** der Kolben (63) und der Schiebekeil (66) eine Ausnehmung (69) aufweisen, in der mindestens ein Federelement (71, 72) angeordnet ist.

10. Vorrichtung gemäß Anspruch 9, **dadurch gekennzeichnet, dass** das Federelement (71, 72) in Längsrichtung des Kolbens (63) wirkt.

11. Brems- und/oder Klemmvorrichtung zum Bremsen oder Klemmen einer Welle gegenüber einem Maschinenteil (5),
- wobei die Vorrichtung mindestens drei über ein Schiebekeilgetriebe (61) betätigbare Reibgehemme (60) umfasst,
- wobei das einzelne Schiebekeilgetriebe (61) zur Belastung des Reibgehemmes (60) mittels Federkraft und/oder Druckluftkraft in eine Richtung und zur Entlastung mittels Druckkraft in die entgegengesetzte Richtung bewegt wird,
**dadurch gekennzeichnet,**
- **dass** jedes Reibgehemme (60) einen separaten am Maschinenteil (5) befestigbaren Grundkörper (59) hat,
- **dass** die Reibgehemme (60) äquidistant verteilt um die Welle (1) herum angeordnet sind.
- **dass** jedes Reibgehemme (60) wenigstens ein in dem Grundkörper (59) gelagertes, an die Welle (1) anpressbares Reibelement (90-93) aufweist,
- **dass** das einzelne Reibelement (90-93) mit einer Reibzone (95) über Flächen- oder Linienberührung bereichsweise an der Welle (1) anliegt und
- **dass** sich das einzelne Reibelement (90-93) außerhalb der Reibzone (95) am tragenden Maschinenteil (5) abstützt.

## Claims

1. Braking and/or clamping assembly for braking or clamping a shaft relative to a casing (10),
- said assembly comprising at least three frictional locks (60) actuatable through a sliding-wedge-type transmission (61);
- each single sliding-wedge transmission being moved by means of spring force and/or pressurized air force in one direction for loading frictional lock (60) and for relief by force in the opposite direction;
**characterized in that**
- the frictional locks (60) each have at least one friction element (90-93) mounted in a casing (10) and adapted to be urged onto shaft (1);
- the friction elements (90-93) each engage shaft (1) in a partial area thereof by a friction zone (95) in surface or line contact with said shaft (1); and
- the friction elements (90-93) each bear against casing (10) outside friction zone (95).

2. Assembly as in claim 1, **characterized in that** friction element (90-93) is secured to, or mounted on, casing (10) before and/or behind friction zone (95), seen in the cirumferential direction of said shaft.

3. Assembly as in claim 1, **characterized by** friction element (90-93) having a mounting eye (97) located before and after friction zone (95), said mounting eyes movably attached to casing (10) by bolts, notched pins or spring-action pins (21).

4. Assembly as in claim 3, **characterized by** friction element (90-93) being thin-walled and resilient at least in portions thereof between mounting eyes (97).

5. Assembly as in claim 1, **characterized by** friction element (90-93) being mounted or secured in casing (10), or formed integral therewith, in a play-free manner.

6. Assembly as in claim 1, **characterized by** the friction elements (90-93) each having disposed behind friction zone (95) thereof a pressure piece (73) radially aligned with shaft (1).

7. Assembly as in claim 1, **characterized by** sliding wedge (66) of sliding-wedge transmission (61) being part of a piston (63).

8. Assembly as in claim 7, **characterized by** piston (63) having a center line (28) aligned to be parallel with center line (2) of shaft (1).

9. Assembly as in claim 7, **characterized by** piston (63) and sliding wedge (66) having a recess (69) receiving at least one spring element (71, 72) therein.

10. Assembly as in claim 9, **characterized by** spring element (71, 72) acting in the longitudinal direction of piston (63).

11. Braking and/or clamping assembly for braking or clamping a shaft relative to a machine element (5),
- said assembly comprising at least three frictional locks (60) actuatable through a sliding-wedge-type transmission (61), and
- each single sliding-wedge transmission (61) being moved by means of spring force and/or pressurized air force in one direction for loading frictional lock (60) and for relief by pressure force in the opposite direction;
**characterized in that**
- frictional locks (60) each have a separate body (59) adapted to be secured to machine element (5);
- said frictional locks (60) are equidistanly distributed about shaft (1);
- frictional locks (60) each have at least one friction element (90-93) mounted in body (59) and adapted to be urged against shaft (1);
- friction elements (90-93) each engage shaft (1) in a partial area thereof by a friction zone (95) in surface or line contact with said shaft (1); and
- friction elements (90-93) each bear against the supporting machine element (5) outside friction zone (95).

## Revendications

1. Dispositif de freinage et/ou de serrage destiné à freiner ou serrer un arbre dans un carter (10), où
- le dispositif comprend au moins trois patins à friction (60) qui peuvent être actionnés par un engrenage à clavette coulissante (61),
- chaque engrenage à clavette coulissante (61) est déplacé dans une direction, pour charger le patin à friction (60), grâce à la force de tension d'un ressort et/ou par air comprimé, et est déplacé dans la direction opposée, pour relâcher cette tension, grâce à un effort de pression,
**caractérisé en ce**
- **que** chaque patin à friction (60) présente au moins un élément à friction (90-93) qui est logé dans un carter (10) et qui peut être pressé contre l'arbre (1)
- **que** chaque élément à friction (90-93), avec une zone de friction (95), est en contact par endroits avec l'arbre (1), par contact linéaire ou par contact de surface et
- **qu'**à l'extérieur de la zone de friction (95) chaque élément à friction (90-93) s'appuie contre le carter (10).

2. Dispositif selon la revendication 1, **caractérisé en ce que** l'élément à friction (90-93) - vu dans le sens de rotation de l'arbre - est fixé ou logé sur le carter (10), devant et/ou derrière la zone de friction (95).

3. Dispositif selon la revendication 1, **caractérisé en ce que** l'élément à friction (90-93) dispose, devant et derrière la zone de friction (95), d'un oeillet de fixation (97) qui est raccordé au carter (10) par des goujons, goupilles ou tiges à ressort (21).

4. Dispositif selon la revendication 3, **caractérisé en que** l'élément à friction (90-93) entre les oeillets de fixation (97) est, par endroits, à paroi mince et élastique.

5. Dispositif selon la revendication 1, **caractérisé en que** l'élément à friction (90-93) est logé, fixé ou formé dans le carter (10) sans jeu.

6. Dispositif selon la revendication 1, **caractérisé en ce qu'**une pièce recevant la pression (73) est placée en position radiale par rapport à l'arbre (1), derrière la zone de friction (95) de chaque élément à friction (90-93).

7. Dispositif selon la revendication 1, **caractérisé en que** la clavette coulissante (66) de l'engrenage à clavette coulissante (61) fait partie d'un piston (63).

8. Dispositif selon la revendication 7, **caractérisé en que** le piston (63) a une ligne médiane (28) qui est orientée de façon parallèle à la ligne médiane (2) de l'arbre (1).

9. Dispositif selon la revendication 7, **caractérisé en que** le piston (63) et la clavette coulissante (66) présentent un creux (69) dans lequel est placé au moins un élément à ressort (71, 72).

10. Dispositif selon la revendication 9, **caractérisé en que** l'élément à ressort (71, 72) exerce son action dans le sens de la longueur du piston (63).

11. Dispositif de freinage et/ou de serrage destiné à freiner ou serrer un arbre relative à une pièce de machine (5), où
- le dispositif est équipé au moins de trois patins à friction (60) qui peuvent être actionnés par un engrenage à clavette coulissante (61)
- chaque engrenage à clavette coulissante (61) est déplacé dans une direction, pour charger le patin à friction (60), grâce à la force de tension d'un ressort et/ou par air comprimé, et est déplacé dans la direction opposée, pour relâcher cette tension, grâce à un effort de pression,
**caractérisé en ce**
- **que** chaque patin à friction (60) a un corps de base séparé (59) qui peut être fixé sur la pièce de machine (5),
- **que** les patins à friction (60) sont disposés de manière équidistante autour de l'arbre (1),
- **que** chaque patin à friction (60) présente au moins un élément à friction (90-93) qui est logé dans le corps de base (59) et qui peut être pressé contre l'arbre (1),
- **que** chaque élément à friction (90-93), avec une zone de friction (95), est en contact par endroits avec l'arbre (1), par contact linéaire ou par contact de surface et
- **qu'**à l'extérieur de la zone de friction (95) chaque élément à friction (90-93) s'appuie contre la pièce de machine portante (5).
